# EUROPÄISCHE PATENTSCHRIFT

(11) **EP 1 401 067 B1**
(45) Veröffentlichungstag und Bekanntmachung des Hinweises auf die Patenterteilung: **24.08.2005**
(21) Anmeldenummer: 03020935.7
(22) Anmeldetag: 16.09.2003
(51) Int. Cl.: H01S 3/093, H01S 3/042

(54) **Optisch gepumpter Festkörperlaser**
Optically pumped solid state laser
Laser à l'état solide à pompage optique

(30) Priorität: 18.09.2002 DE 10243323
(43) Veröffentlichungstag der Anmeldung: 24.03.2004
(73) Patentinhaber: arccure technologies GmbH, 59557 Lippstadt (DE)
(72) Erfinder: Bisges, Michael, 59557 Lippstadt (DE)
(74) Vertreter: Kohlmann, Kai

(56) Entgegenhaltungen:
- EP-A- 0 525 891
- WO-A-02/097828
- DE-A- 4 032 488
- FR-A- 2 150 616
- US-A- 4 734 917
- PATENT ABSTRACTS OF JAPAN vol. 013, no. 051 (E-712), 6. Februar 1989 (1989-02-06) -& JP 63 244692 A (HOYA CORP), 12. Oktober 1988 (1988-10-12)

## Beschreibung

Die Erfindung betrifft einen optisch gepumpten Laser, mit mindestens einem eine Längsachse aufweisenden stabförmigen Lasermedium, das im Innenraum eines Gehäuses parallel zu mindestens einer stabförmigen Pumplichtquelle angeordnet ist, wobei die elektromagnetische Strahlung jeder Pumplichtquelle in die Arbeitsseitenfläche von mindestens einem Lasermedium eingekoppelt wird.

Laser finden Anwendung in der Materialbearbeitung, beispielsweise beim Schweißen, Schneiden, Bohren und Beschriften, in der Medizin, beispielsweise zum Schneiden und Abtragen von Gewebe sowie zur Erzeugung von Stoßwellen zur Zertrümmerung von Nieren- oder Gallensteinen. Des weiteren werden Laser in den verschiedensten Bereichen der Forschung eingesetzt.

Nach der Art des Lasermediums lassen sich Festkörperlaser, Halbleiterlaser, Flüssigkeitslaser sowie Gaslaser unterscheiden. Die vorliegende Erfindung betrifft einen Festkörperlaser mit stabförmigem Lasermedium. Festkörperlaser werden optisch von einer intensiven Pumplichtquelle gepumpt. Meist werden dafür Xenon- oder Krypton-Blitzlampen sowie Quecksilber-Hochdrucklampen verwendet. Die wichtigsten Festkörper-Laser sind der Rubin-, der Neodym-YAG(Nd:YAG) und der Neodym-Glas-Laser. Das Pumpen bewirkt auf an sich bekannte Weise, dass die Atome in dem Lasermedium angeregt und in einen metastabilen Zustand gebracht werden, in welchem die Lasertätigkeit hervorgerufen wird.

Für einen optisch gepumpten Laser in Hochleistungs-Impulsbetrieb oder im Hochleistungs-Dauerbetrieb sind hochintensive Pumplichtquellen, die in der Lage sind, die erforderliche Menge an elektromagnetischer Strahlung zu erzeugen, lediglich in gerader, rohrförmiger Ausbildung verfügbar. Das Lasermedium ist in verschiedenen Konfigurationen verfügbar, wobei für die vorliegende Erfindung von einer stabförmigen Konfiguration ausgegangen wird.

Optisch gepumpte Laser unterscheidet man weiter nach der Richtung der Einkopplung des Pumplichts. Bei einem longitudinal gepumpten Laser wird das von der Pumplichtquelle erzeugte Pumplicht parallel oder zumindest annähernd parallel zu der Richtung des von dem Laser erzeugten Laserstrahls in den Resonator eingekoppelt, während bei den radial gepumpten Lasern das von der Pumplichtquelle erzeugte Pumplicht radial oder zumindest annähernd radial zur Längsachse des stabförmigen Lasermediums eingekoppelt wird. Hierzu wird die von der Pumplichtquelle emittierte elektromagnetische Strahlung so gelenkt, dass sie auf die Arbeitsseitenfläche des Lasermediums auftrifft.

Aus der DE 37 38 921 C2 ist ein optisch gepumpter Laser mit stabartigem Lasermedium bekannt, das im Innenraum eines innenverspiegelten hohlzylindrischen Gehäuses und parallel zu einer Gasentladungslampe angeordnet ist. Das Pumplicht trifft teilweise auf direktem Weg, teilweise über die Innenverspiegelung, auf die Arbeitsseitenfläche des Lasermediums, also zumindest teilweise radial zu dessen Längsachse, auf. Ein Problem bei derartigen Lasern besteht darin, dass etwa 50 % der in die Pumplichtquelle eingekoppelten elektrischen Energie als Verlustwärme frei wird. Die wirksame Abfuhr der Abwärme ist für hohe Laserleistungen sowie die Haltbarkeit des Lasers von entscheidender Bedeutung. Eine ungleichmäßige Kühlung der Pumplichtquelle über ihre Länge kann thermische Veränderungen oder Gradienten innerhalb des Lasermediums hervorrufen. Diese thermischen Gradienten erzeugen Brechungseffekte in dem laseraktiven Medium, bekannt als Linseneffekte, die den Laserstrahl verzerren.

Aus der DE 695 07 434 T2 ist eine optisch gepumpte Laservorrichtung bekannt, die eine verbesserte Kühlstruktur für einen Laserstab aufweist. Die Kühlstruktur weist einen ringförmigen Kanal auf, der peripher um den Laserstab herum angeordnet ist. Um die Effizienz der Kühlung zu verbessern und gleichzeitig das Pumpen des Laserstabes nicht zu beeinträchtigen, ist die Kühlstruktur so ausgebildet, dass das Kühlmittel mit radialer Strömung auf den Laserstab auftrifft. Die Auftreffkühlung eliminiert die Probleme, die mit der axialen Strömung des Kühlmittels verbunden sind, da das Kühlmittel im wesentlichen senkrecht zu der Oberfläche des Laserstabes mit vielen, gleichförmig entlang des Stabes verteilten Jetstrahlen gerichtet wird. Die Gleichförmigkeit der Kühlung wird nicht durch einen Druckabfall beeinflusst, da der Druckabfall in sämtlichen Jet-Düsen, die längs des Laserstabes angeordnet sind, gleich ist. Bei axialer Strömung des Kühlmittels tritt indes ein Druckabfall über die Länge des Laserstabes auf, was eine ungleichmäßige Kühlung zur Folge hat. Der Aufbau der komplexen, den Laserstab umgebenden Kühlstruktur macht es jedoch erforderlich, dass das Licht longitudinal in den Laserstab eingekoppelt wird.

Aus der DE 37 24 022 A1 ist eine arbeitsseitig optisch gepumpte Laservorrichtung mit zwei parallel zueinander angeordneten Pumplichtquellen bekannt, deren Laserstab axial gekühlt ist. Hierzu strömt im Betrieb der Laservorrichtung ein flüssiges Kühlmittel über die Arbeitsseitenfläche des laseraktiven Mediums durch dafür vorgesehene Kühlmittelkanäle. Die rohrförmigen Pumplichtquellen sind im wesentlichen parallel zu den und in gleicher Ausdehnung wie die Arbeitsseitenflächen des laseraktiven Mediums angeordnet. Damit die elektromagnetische Strahlung, die durch die Pumplichtquellen emittiert wird, auf die Arbeitsseitenflächen des laseraktiven Mediums auftreffen können, sind die Kühlmittelkanäle aus optisch klarem Glas hergestellt. Die transparenten Kühlmittelkanäle ermöglichen zwar eine im wesentlichen radiale Einkopplung der elektromagnetischen Strahlung von den parallel zum stabförmigen Lasermedium angeordneten Pumplichtquellen, machen jedoch den nachteiligen axialen Kühlmittelstrom erforderlich.

Aus der US 4734 917 ist ein optisch gepumpter Laser mit einem stabförmigen Lasermedium bekannt, das im Innenraum eines Gehäuses parallel zu zwei stabförmigen Pumplichtquellen angeordnet ist, deren elektromagnetische Strahlung in die Arbeitsseitenfläche des Lasermediums eingekoppelt wird. In dem Gehäuse angeordnete Kühlmitteldurchgänge erlauben es, dass ein Kühlmittel über die Pumplichtquellen in einen Raum fließt, in dem sich das Lasermedium befindet. Der Durchgang zwischen Pumplichtquelle und Lasermedium dient zugleich als direkter Weg für das Pumplicht auf die Seitenflächen des Lasermediums. Die Weite der Durchgänge kann variiert werden, um die direkte Lichtmenge, die auf das Lasermedium trifft, zu steuern.

Schließlich ist aus der DE 692 02 416 T2 ein kontinuierlich optisch gepumpter Laser bekannt, bei dem der Laser drehbar angeordnet ist. Die drehbare Anordnung sorgt für eine gleichförmigere Temperaturverteilung in dem Laserstab, in dem der gesamte Laserstab gleichmäßig der Lichtquelle ausgesetzt wird.

Ausgehend von diesem Stand der Technik liegt der Erfindung die Aufgabe zugrunde, einen Laser der eingangs erwähnten Art zu schaffen, bei dem die durch Verlustwärme und deren Abfuhr auftretenden Probleme reduziert sind und der hohe spezifische Leistungen ermöglicht.

Die Lösung dieser Aufgabe basiert auf dem Gedanken, die arbeitsseitige Einkopplung der elektromagnetischen Strahlung mit einer Kühlung zu verbinden, die eine gleichmäßige Temperaturverteilung längs jeder Pumplichtquelle und/oder des Lasermediums gewährleistet.

Diese Aufgabe wird beim optisch gepumpten Laser der eingangs erwähnten Art dadurch gelöst,
- dass jede Pumplichtquelle zwischen einer Zuführung und einem Abzug für ein Kühlmedium angeordnet ist,
- wobei sich die Zuführung und der Abzug auf entgegengesetzten Längsseiten der Pumplichtquelle befinden,
- dass die Zuführung und der Abzug jeweils mindestens eine sich in Richtung der Längsachse der stabförmigen Pumplichtquelle erstreckende Kühlmediumöffnung aufweisen,
- dass die Zuführung oder der Abzug in Form eines Kanals integraler Bestandteil einer langgestreckten Barriere ist, die den direkten Strahlengang von der Pumplichtquelle auf das Lasermedium vollständig ausblendet.

Die Zuführung oder der Abzug in Form eines Kanals, sind integraler Bestandteil der langgestreckten Barriere, die den direkten Strahlengang von der Pumplichtquelle auf das stabförmige Lasermedium vollständig ausblendet. Bei dem erfindungsgemäßen Laser wird wirksam eine Überhitzung des Lasermediums und der Pumplichtquelle auch bei hohen Leistungen verhindert. Die Barriere verhindert lokale Überhitzungen durch die Direkteinstrahlung des Pumplichts auf das Lasermedium, während die Kühlung eine höhere spezifische Leistung bezogen auf die Länge des Lasers ermöglicht.

Indem die Zuführung und der Abzug jeweils mindestens eine sich in Richtung der Längsachse jeder stabförmigen Pumplichtquelle, vorzugsweise über deren gesamte Länge erstreckende Kühlmediumsöffnung aufweisen, wird eine gleichmäßige Kühlung jeder Pumplichtquelle erreicht.

Die verbesserte Kühlung jeder Pumplichtquelle ermöglichen Pumpleistungen von bis zu 1 KW je cm Lampenlänge.

Zumindest in der Kühlmediumöffnung des Kanals ist ein Strömungswiderstand angeordnet, der den Kanal von dem übrigen Inneraum des Gehäuses trennt. Der Strömungswiderstand vergleichmässigt den Über- bzw. Unterdruck über die gesamte Länge der Pumplichtquelle.

Eine besonders effektive und gleichmäßige Kühlung für die langgestreckte Pumplichtquelle zeichnet sich dadurch aus, dass die Zuführung und der Abzug jeweils einen in der Kühlmediumöffnung angeordneten Strömungswiderstand aufweisen. Technisch ist der Strömungswiderstand beispielsweise durch ein Sieb realisiert, das einen der Zuführung bzw. dem Abzug des Kühlmediums dienenden Kanal von dem übrigen Innenraum des Gehäuses des Lasers trennt.

Vorzugsweise sind sowohl jede Pumplichtquelle als auch jedes Lasermedium zwischen einer Zuführung und einem Abzug für das Kühlmedium angeordnet. Die vorstehend anhand der Pumplichtquelle erläuterten Vorteile und Wirkungen gelten in gleicher Weise für das stabförmige Lasermedium.

In vorteilhafter Ausgestaltung der Erfindung umgibt mindestens eine Gegenfläche teilweise das stabförmige Lasermedium und / oder die stabförmige Pumplichtquelle unter Ausbildung eines sich in Richtung des Abzuges verjüngenden Spaltes. Der sich verjüngende Spalt erhöht die Strömungsgeschwindigkeit des Kühlmediums vom Eintritt in den Spalt bis zum Eintritt in den Abzug. Die Geschwindigkeitszunahme verhindert, dass sich die Strömung von der Pumplichtquelle und / oder dem Lasermedium ablöst (laminare Strömung) und stellt damit sicher, dass auch die der Zuführung abgewandte Seite der Pumplichtquelle und / oder des Lasermediums ständig vom Kühlmedium überstrichen wird.

Die Oberfläche der Barriere zwischen Pumplichtquelle und Lasermedium kann zur Ausbildung des sich verjüngenden Spaltes genutzt werden, der die Strömungsgeschwindigkeit des Kühlmediums erhöht. Dies setzt voraus, dass der Abzug in die Barriere integriert ist.

Selbstverständlich liegt es im Rahmen der Erfindung, die Zufuhr, insbesondere einen oder mehrere Zuführungskanäle für das Kühlmedium in die Barriere zu integrieren und den Abzug auf der gegenüberliegenden Seite der Pumplichtquelle und /oder des Lasermediums anzuordnen.

Die Pumplichtquellen sind derart gestaltet, dass die vom Glas absorbierte Energie durch freie Konvektion und durch Strahlung abgegeben wird. Ein Gleichgewicht zwischen der absorbierten und der abgegebenen Energiemenge würde sich bei einer Temperatur des Glaskörpers der Pumplichtquelle von etwa 800° C einstellen. In der Praxis behindern aber die Reflektoren in dem Gehäuse des Lasers diesen Zustand. Es kommt zu Reflexionen von Wärmestrahlungen und teilweise sogar zu Hitzestaus in der Nähe der Pumplichtquelle. Die starke Wärmebelastung in Kombination mit einer kritischen Baulänge der Pumplichtquelle bewirken, dass sich die Pumplichtquellen aber auch das Lasermedium mit der Schwerkraft verformen. Aufgrund dessen ist die Baubreite von gattungsgemäßen Lasern begrenzt. Außerdem führen die thermisch bedingten Verformungen zu einem vorzeitigen Verschleiß von Pumplichtquelle und Lasermedium.

Um größere Baulängen des Laser ohne die schädlichen Verformungen der Pumplichtquellen und/oder des Lasermediums zu ermöglichen, wird in einer Ausgestaltung der Erfindung vorgeschlagen, dass die Pumplichtquelle und /oder das Lasermedium um seine Längsachse drehbar angeordnet ist.

Die Drehung der Pumplichtquelle und / oder des Lasermediums gleicht den Einfluss der Schwerkraft auf die wärmebedingten Kriechvorgänge im Material aus. Bei freier Konvektion ist die Temperatur an der Oberseite der Pumplichtquelle und / oder des Lasermediums höher als an der Unterseite, da die Oberseite durch die nach oben strömende Luft stärker erwärmt wird. Indem die Pumplichtquelle und / oder das Lasermedium gedreht wird, kann der Laser bei insgesamt höherer spezifischer Leistung betrieben werden, da stets wechselnde Bereiche den höchsten Temperaturen ausgesetzt sind. Hieraus resultiert eine vergleichmässigte Oberflächentemperatur über den Umfang der Pumplichtquelle und/oder des Lasermediums. Die Kombination aus laminarer Strömung des Kühlmediums und Drehung der Pumplichtquelle und/oder des Lasermediums ermöglicht eine Reduzierung des erforderlichen Kühlmediumvolumenstromes etwa um den Faktor 10 gegenüber herkömmlichen Systemen.

Um Beschädigungen des regelmäßig aus Glas bestehenden Körpers der Pumplichtquelle und / oder des Lasermediums zu vermeiden, werden die beiden Enden von Pumplichtquelle und / oder Lasermedium in einer drehbar gelagerten Aufnahme gehalten, und mindestens eine der beiden Aufnahmen ist mit einem Antrieb verbunden. Sind beide Aufnahmen mit einem Antrieb verbunden, lässt sich eine Torsion des Laserstabs und / oder der Pumplichtquelle durch das Antriebsmoment weitgehend verhindern. Der Antrieb für die Drehung kann beispielsweise pneumatisch, elektrisch oder auch manuell erfolgen. In Versuchen hat sich jedoch herausgestellt, dass es bei Pumplichtquellen bis etwa 2 m Länge genügt, wenn der Antrieb lediglich an einem Ende angreift.

Insbesondere bei lediglich in einer vorgegebenen Richtung drehenden Pumplichtquelle sowie zur weiteren Reduzierung des Lampenverschleißes ist es vorteilhaft, die für deren Betrieb erforderliche Energie kontaktlos zuzuführen, beispielsweise über elektromagnetische Strahlung (Mikrowellenanregung). Soll die Energie herkömmlich zugeführt werden, können Schleifringe eingesetzt werden.

Bei Drehung der Pumplichtquelle mit regelmäßiger Richtungsänderung kann die elektrische Energie jedoch auch über flexible Kabel zugeführt werden, vorausgesetzt, die Drehwinkel in entgegengesetzter Richtung halten sich die Waage.

Wird die Drehrichtung der Pumplichtquelle und / oder des Lasermediums jeweils nach einer Teildrehung der Strahlungsquelle um mindestens 180° geändert, so erfährt jeder Punkt des Körpers der Pumplichtquelle und / der des Lasermediums die angreifende Schwerkraft einmal als positiven und einmal als negativen Kraftvektor in annähernd gleicher Größe. Die bei einer langsamen Drehung auftretenden Verformungen stellen sich aufgrund dieser Betriebsweise wieder zurück. Vorteilhafte Drehzahlen liegen im Bereich von 0,1 bis 0,2 r/s.

Um die Verformung im Gleichgewicht zu halten, sollte die Drehzahl nach dem Anfahren konstant gehalten werden. Dadurch wird gewährleistet, dass jeder Punkt des Körpers der Pumplichtquelle und / oder des Lasermediums für die gleiche Dauer derselben Schwerkraft sowohl in negativer als auch in positiver Richtung ausgesetzt wird.

Sind die Reflektoren in dem Gehäuse des Lasers sowie gegebenenfalls an der Barriere als dichroitische Spiegel ausgebildet, die zugleich die Funktion eines Lichtfilters übernehmen, können mittels der Barriere sowie der Reflektoren gezielt ausschließlich die zur Anregung des Lasermediums notwendigen elektromagnetischen Strahlungen reflektiert werden, während die nicht erforderlichen Wellenlängen, insbesondere im Infrarotbereich, von den teildurchlässigen Reflektoren ausgefiltert und an das vorzugsweise gekühlte Gehäuse des Lasers und die Barriere abgegeben werden.

Wenn das hohlzylindrische Gehäuse einen elliptischen Querschnitt aufweist, der senkrecht zur Längsachse des stabförmigen Lasermediums sowie der Längsachse jeder Pumplichtquelle steht, lässt sich der Wirkungsgrad steigern und damit die thermische Belastung des Lasers senken, wenn das Gehäuse zumindest teilweise innenverspiegelt ist und die Oberfläche des stabförmigen Lasermediums sowie die Oberfläche jeder stabförmigen Pumplichtquelle in den Brennpunkten des Spiegels, insbesondere der Innenverspiegelung des elliptischen Gehäuses angeordnet sind.

Wenn in der Barriere Durchgänge für ein Kühlmedium, insbesondere Wasser, vorgesehen sind, lässt sich deren thermische Beanspruchung wirksam reduzieren. Die Durchgänge für ein Kühlmedium tragen zur Rückkühlung eines als Umlaufkühlung geführten Kühlmediumstromes bei.

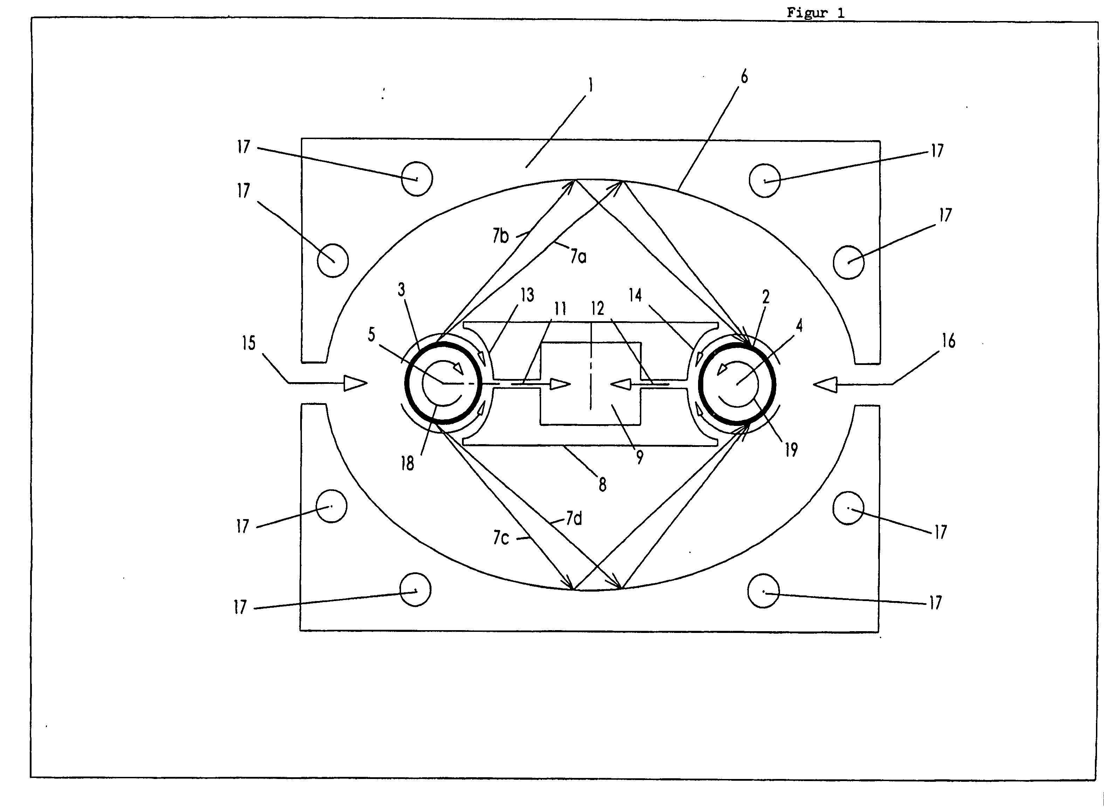

Nachfolgend wird die Erfindung anhand der Zeichnung näher erläutert. Es zeigt
- Fig. 1: einen Querschnitt durch einen erfindungsgemäßen Laser.

Figur 1 zeigt ein Gehäuse 1, in dem ein stabförmiges Lasermedium 2 und eine Pumplichtquelle 3 achsparallel zueinander angeordnet sind. Die in die Bildebene weisenden Längsachsen von Lasermedium 2 und Pumplichtquelle 3 sind in der Zeichnung durch die Positionen 4, 5 gekennzeichnet. Der vollständig innenverspiegelte Innenraum des Gehäuses 1 hat einen elliptischem Querschnitt, wobei die Querschnittsfläche senkrecht zu den Längsachsen 4, 5 steht. Die Längsachse 4 des Lasermediums 2 sowie die Längsachse 5 der Pumplichtquelle 3 sind in den Brennpunkten der elliptischen Innenverspiegelung angeordnet. Durch die Anordnung in den Brennpunkten steht das von der Pumplichtquelle 3 emittierte Pumplicht nahezu vollständig zum Pumpen des Lasermediums 2 zur Verfügung. Der Strahlengang von der Pumplichtquelle 3 auf die Arbeitsseite des Lasermediums 2 ist durch die Pfeile 7 a - d angedeutet.

Zwischen der Pumplichtquelle 3 und dem Lasermedium 2 befindet sich eine langgestreckte Barriere 8, die den direkten Strahlengang von der Pumplichtquelle 3 auf das Lasermedium 2 vollständig ausblendet.

In der sich zumindest über die gesamte Länge der Pumplichtquelle 3 und des Lasermediums 2 erstreckenden Barriere 8 ist ein zentraler Abzugskanal 9 angeordnet, der stirnseitig mit einem in der Figur nicht dargestellten Unterdruckerzeuger, beispielsweise einem Gebläse, verbunden ist. Der Abzugskanal 9 weist zwei sich in Richtung der Längsachsen des Lasermediums 2 und der Pumplichtquelle 3 erstreckende Kühlmediumöffnungen 11, 12 auf. Die der Pumplichtquelle 3 zugeordnete Kühlmediumöffnung 11 mündet in einer konkaven Fläche 13 an der Längsseite der Barriere 8 mit einem gegenüber der im Querschnitt kreisrunden Pumplichtquelle 3 größeren Krümmungsradius. Die dem Lasermedium 2 zugeordnete Kühlmediumöffnung 12 mündet ebenfalls in einer konkaven Fläche 14 mit einem gegenüber dem im Querschnitt runden Lasermedium 2 größeren Krümmungsradius.

Auf den den Kühlmediumöffnungen 11, 12 entgegengesetzten Längsseiten der Pumplichtquelle 3 einerseits und des Lasermediums 2 andererseits befindet sich jeweils eine weitere, über die gesamte Länge von Pumplichtquelle 3 und Lasermedium 2 erstreckende Kühlmediumöffnung 15, 16 in dem Gehäuse 1. Die Kühlmediumöffnungen 15, 16 dienen der Zufuhr von Kühlmedium, das im gezeigten Ausführungsbeispiel aus der Atmosphäre angesaugt wird. Abweichend hiervon ist es selbstverständlich möglich, das Kühlmedium in einem den Abzugskanal 9 enthaltenden Kreislauf zu führen, der einen Wärmetauscher zur Rückkühlung des abgesaugten Kühlmediums aufweist. Eine weitere Möglichkeit besteht darin, das Kühlmedium über die Kühlmediumöffnungen 15 und 16 unter erhöhtem Druck und gegebenenfalls vorgekühlt zuzuführen, ohne dass ein Kreislauf zwischen Kühlmediumzufuhr und Kühlmediumabzug besteht.

Im dargestellten Ausführungsbeispiel umgeben die an den Längsseiten der Barriere angeordneten konkaven Flächen 13, 14 das stabförmige Lasermedium 2 bzw. die stabförmige Pumplichtquelle 3 unter Ausbildung eines sich in Richtung der Kühlmediumöffnungen 11, 12 verjüngenden Spaltes. Der sich verjüngende Spalt bewirkt aufgrund der Zunahme der Strömungsgeschwindigkeit, dass sich der Kühlmediumstrom nicht von der Oberfläche der Pumplichtquelle 3 bzw. des Lasermediums 2 ablöst.

Eine weitere Reduzierung der thermischen Belastung des Lasermediums 2 und der Pumplichtquelle 3 wird dadurch erreicht, dass sowohl das Lasermedium als auch die Pumplichtquelle um ihre Längsachsen 4, 5 drehbar in dem Gehäuse 1 des Lasers angeordnet sind. Der Antrieb für die Drehung erfolgt über in der Zeichnung nicht dargestellte Antriebe und Getriebe. Die durch die Pfeile 18, 19 in der Figur angedeutete Drehrichtung des Lasermediums 2 und der Pumplichtquelle 3 ist mittels einer nicht dargestellten, an sich bekannten Umkehrsteuerung änderbar. Die Drehrichtung wird vorzugsweise jeweils nach einer Teildrehung um mindestens 180° geändert.

Im Zusammenwirken mit der Barriere 8 sowie dem Kühlmediumstrom wird bei dem erfindungsgemäßen Laser wirksam eine Überhitzung des Lasermediums 2 und der Pumplichtquelle 3 auch bei hohen Leistungen verhindert. Die Barriere verhindert lokale Überhitzungen durch die Direkteinstrahlung des Pumplichts auf das Lasermedium 2, währen die Kühlung in Verbindung mit der Drehung von Pumplichtquelle 3 und Lasermedium 2 eine größere Baubreite des Lasers bei gleichzeitig höherer spezifischer Leistung bezogen auf die Länge des Lasers ermöglichen. Eine weitere Reduzierung der Wärmebelastung des Lasers bewirken die in den Eckbereichen des Gehäuses, achsparallel zu der Pumplichtquelle und dem Lasermedium verlaufenden Durchgänge 17 für ein Kühlmittel, insbesondere Wasser.

### Bezugszeichenliste:

- 1: Gehäuse
- 2: Lasermedium
- 3: Pumplichtquelle
- 4: Längsachse
- 5: Längsachse
- 6: Innenwand
- 7: Strahlengang
- 8: Barriere
- 9: Abzugskanal
- 10: -
- 11: Kühlmediumöffnung
- 12: Kühlmediumöffnung
- 13: Fläche
- 14: Fläche
- 15: Kühlmediumöffnung
- 16: Kühlmediumöffnung
- 17: Durchgang
- 18: Drehrichtung Lasermedium
- 19: Drehrichtung Pumplichtquelle

## Patentansprüche

1. Optisch gepumpter Laser, mit mindestens einem eine Längsachse aufweisenden stabförmigen Lasermedium, wobei jedes Lasermedium im Innenraum eines Gehäuses parallel zu mindestens einer stabförmigen Pumplichtquelle angeordnet ist, wobei die elektromagnetische Strahlung jeder Pumplichtquelle in die Arbeitsseitenfläche von mindestens einem Lasermedium eingekoppelt wird, wobei
- jede Pumplichtquelle (3) zwischen einer Zuführung und einem Abzug für ein Kühlmedium angeordnet ist,
- wobei sich die Zuführung und der Abzug auf entgegengesetzten Längsseiten der Pumplichtquelle (3) befinden,
- die Zuführung und der Abzug jeweils mindestens eine sich in Richtung der Längsachse (5) der stabförmigen Pumplichtquelle (3) erstreckende Kühlmediumöffnung (11,15) aufweisen, **dadurch gekennzeichnet,**
- **dass** die Zuführung oder der Abzug in Form eines Kanals (9) integraler Bestandteil einer langgestreckten Barriere (8) zwischen der Pumplichtquelle (3) und dem Lasermedium (2) ist, die den direkten Strahlengang (7) von der Pumplichtquelle (3) auf das Lasermedium (2) vollständig ausblendet.

2. Laser nach Anspruch 1, **dadurch gekennzeichnet, dass** zumindest in der Kühlmediumöffnung (11) des Kanals (9) ein Strömungswiderstand angeordnet ist, der den Kanal (9) von dem übrigen Innenraum des Gehäuses (1) trennt.

3. Laser nach Anspruch 1 oder 2, **dadurch gekennzeichnet,**
- **dass** jedes Lasermedium (2) zwischen einer Zuführung und einem Abzug für ein Kühlmedium angeordnet ist,
- wobei sich die Zuführung und der Abzug auf entgegengesetzten Längsseiten des Lasermediums (2) befinden,
- **dass** die Zuführung und der Abzug jeweils mindestens eine sich in Richtung der Längsachse (4) des stabförmigen Lasermediums (2) erstreckende Kühlmediumöffnung (12,16) aufweisen,
- **dass** die Zuführung oder der Abzug in Form eines Kanals (9) integraler Bestandteil der langgestreckten Barriere (8) ist und
- **dass** zumindest in der Kühlmediumöffnung (12) des Kanals (9) ein Strömungswiderstand angeordnet ist, der den Kanal (9) von dem übrigen Innenraum des Gehäuses (1) trennt.

4. Laser nach Anspruch 2 oder 3, **dadurch gekennzeichnet, dass** jeder Strömungswiderstand ein Sieb ist.

5. Laser nach einem der Ansprüche 1 bis 4, **dadurch gekennzeichnet, dass** mindestens eine Gegenfläche (13, 14) das stabförmige Lasermedium (2) und/oder die stabförmige Pumplichtquelle (3) unter Ausbildung eines sich in Richtung des Abzuges verjüngenden Spaltes teilweise umgibt.

6. Laser nach Anspruch 5, **dadurch gekennzeichnet, dass** jede Gegenfläche (13, 14) zur Ausbildung des sich verjüngenden Spaltes von der Oberfläche der Barriere (8) gebildet wird.

7. Laser nach einem der Ansprüche 1 bis 6, **dadurch gekennzeichnet, dass** mindestens ein stabförmiges Lasermedium (2) um seine Längsachse (4) drehbar angeordnet und/oder mindestens eine Pumplichtquelle (3) um ihre Längsachse (5) drehbar angeordnet ist.

8. Laser nach einem der Ansprüche 1 bis 7, **dadurch gekennzeichnet, dass** mindestens ein Reflektor jede Pumplichtquelle (3) und/oder jedes Lasermedium (2) umgibt.

9. Laser nach einem der Ansprüche 1 bis 8, **dadurch gekennzeichnet, dass** mindestens ein Reflektor an jeder Barriere angeordnet ist.

10. Laser nach einem der Ansprüche 1 - 9, **dadurch gekennzeichnet, dass** in der Barriere (8) Durchgänge für ein Kühlmedium vorgesehen sind.

11. Laser nach einem der Ansprüche 1 - 10, **dadurch gekennzeichnet, dass**
- das Gehäuse (1) hohlzylindrisch ausgebildet ist und einen elliptischen Querschnitt aufweist, wobei die Querschnittsfläche senkrecht zur Längsachse (4) jedes stabförmigen Lasermediums sowie der Längsachse (5) jeder stabförmigen Pumplichtquelle steht,
- das Gehäuse (1) zumindest teilweise innenverspiegelt ist
- und die Oberfläche mindestens eines stabförmigen Lasermediums (2) sowie die Oberfläche mindestens einer stabförmigen Pumplichtquelle (3) in Brennpunkten des Spiegels angeordnet sind.

## Claims

1. An optically pumped laser comprising at least one rod-shaped laser medium having a longitudinal axis, wherein each laser medium is arranged in the interior of a housing parallel to at least one rod-shaped pump light source, wherein the electromagnetic radiation of each pump light source is coupled into the working side surface of at least one laser medium, wherein
- each pump light source (3) is arranged between an inlet and an outlet for a cooling medium,
- wherein the inlet and the outlet are located on opposite longitudinal sides of the pump light source (3),
- the inlet and the outlet each have at least one cooling medium opening (11, 15) extending in the direction of the longitudinal axis (5) of the rod-shaped pump light source (3), **characterised in**
- **that** the inlet or the outlet is in the form of a channel (9) of an integral component of an elongated barrier (8) between the pump light source (3) and the laser medium (2) which completely masks the direct ray path (7) from the pump light source (3) onto the laser medium (2).

2. The laser according to claim 1, **characterised in that** a flow resistance is arranged at least in the cooling medium opening (11) of the channel (9), which separates the channel (9) from the remaining interior of the housing (1).

3. The laser according to claim 1 or claim 2, **characterised in**
- **that** each laser medium (2) is arranged between an inlet and an outlet for a cooling medium,
- wherein the inlet and the outlet are located on opposed longitudinal sides of the laser medium (2),
- **that** the inlet and the outlet each have at least one cooling medium opening (12, 16) extending in the direction of the longitudinal axis (4) of the rod-shaped laser medium (2),
- **that** the inlet or the outlet is in the form of a channel (9) of an integral component of the elongated barrier (8) and
- **that** a flow resistance is arranged at least in the cooling medium opening (12) of the channel (9) which separates the channel (9) from the remaining interior of the housing (1).

4. The laser according to claim 2 or claim 3, **characterised in that** each flow resistance is a screen.

5. The laser according to any one of claims 1 to 4, **characterised in that** a counter-surface (13, 14) partly surrounds the rod-shaped laser medium (2) and/or the rod-shaped pump light source (13) forming a gap which tapers in the direction of the outlet.

6. The laser according to claim 5, **characterised in that** each counter-surface (13, 14) for forming the tapering gap is formed by the surface of the barrier (8).

7. The laser according to any one of claims 1 to 6, **characterised in that** at least one rod-shaped laser medium (2) is arranged rotatably about its longitudinal axis (4) and/or at least one pump light source (3) is arranged rotatably about its longitudinal axis (5).

8. The laser according to any one of claims 1 to 7, **characterised in that** at least one reflector surrounds each pump light source (3) and/or each laser medium (2).

9. The laser according to any one of claims 1 to 8, **characterised in that** at least one reflector is arranged on each barrier.

10. The laser according to any one of claims 1-9, **characterised in that** openings for a cooling medium are arranged in the barrier (8).

11. The laser according to any one of claims 1-10, **characterised in that**
- the housing (1) is constructed as hollow-cylindrical and has an elliptical cross-section, wherein the cross-sectional surface is perpendicular to the longitudinal axis (4) of each rod-shaped laser medium and the longitudinal axis (5) of each rod-shaped pump light source,
- the housing (1) is at least partly internally reflection coated
- and the surface of at least one rod-shaped laser medium (2) and the surface of at least one rod-shaped pump light source (3) are arranged at the focal points of the mirror.

## Revendications

1. Laser à pompage optique, comportant au moins un milieu laser en forme de barreau présentant un axe longitudinal, dans lequel chaque milieu laser est disposé dans l'espace interne d'un logement parallèlement à au moins une source de lumière de pompage en forme de barreau, dans lequel le rayonnement électromagnétique de chaque source de lumière de pompage est couplée dans les surfaces latérales de travail d'au moins un milieu laser, dans lequel
- chaque source de lumière de pompage (3) est disposée entre une entrée et une sortie d'un milieu de refroidissement,
- dans lequel l'entrée et la sortie se trouvent sur des côtés longitudinaux opposés de la source de lumière de pompage (3),
- l'entrée et la sortie présentent respectivement au moins une ouverture de milieu de refroidissement (11,15) s'étendant dans la direction de l'axe longitudinal (5) de la source de lumière de pompage (3) en forme de barreau,
**caractérisé en ce que**
- l'entrée ou la sortie est, sous la forme d'un canal (9), partie intégrante d'une barrière (8) allongée entre la source de lumière de pompage (3) et le milieu laser (2), laquelle occulte complètement le trajet direct des rayons (7) de la source de lumière de pompage (3) vers le milieu laser (2).

2. Laser selon la revendication 1, **caractérisé en ce que** une résistance à l'écoulement est disposée au moins dans l'ouverture de milieu de refroidissement (11) du canal (9), laquelle sépare le canal (9) du reste de l'espace interne du logement (1).

3. Laser selon la revendication 1 ou 2, **caractérisé en ce que**
- chaque milieu laser (2) est disposé entre une entrée et une sortie d'un milieu de refroidissement,
- l'entrée et la sortie se trouvent sur des côtés longitudinaux opposés du milieu laser (2),
- l'entrée et la sortie présentent respectivement au moins une ouverture de milieu de refroidissement (12,16) s'étendant dans la direction de l'axe longitudinal (4) du milieu laser en forme de barreau (2),
- l'entrée ou la sortie est, sous la forme d'un canal (9), partie intégrante de la barrière (8) allongée et
- une résistance à l'écoulement est disposée au moins dans l'ouverture de milieu de refroidissement (12) du canal (9), laquelle sépare le canal (9) du reste de l'espace interne du logement (1).

4. Laser selon la revendication 2 ou 3, **caractérisé en ce que** chaque résistance à l'écoulement est un tamis.

5. Laser selon une des revendications 1 à 4, **caractérisé en ce que** au moins une surface opposée (13,14) entoure partiellement le milieu laser en forme de barreau (2) et/ou la source de lumière de pompage en forme de barreau (3) en formant un espace vide qui va en s'amincissant dans la direction de la sortie.

6. Laser selon la revendication 5, **caractérisé en ce que** chaque surface opposée (13,14) réalisant l'espace vide qui va en s'amincissant est formée par la surface supérieure de la barrière (8).

7. Laser selon une des revendications 1 à 6, **caractérisé en ce que** au moins un milieu laser (2) en forme de barreau est disposé de manière à pivoter autour de son axe longitudinal (4) et/ou au moins une source de lumière de pompage (3) est disposée de manière à pivoter autour de son axe longitudinal (5).

8. Laser selon une des revendications 1 à 7, **caractérisé en ce que** au moins un réflecteur entoure chaque source de lumière de pompage (3) et/ou chaque milieu laser (2).

9. Laser selon une des revendications 1 à 8, **caractérisé en ce que** au moins un réflecteur est disposé sur chaque barrière.

10. Laser selon une des revendications 1 à 9, **caractérisé en ce que** des passages d'un milieu de refroidissement sont prévus dans la barrière (8).

11. Laser selon une des revendications 1 à 10, **caractérisé en ce que**
- le logement (1) est configuré comme un cylindre creux et présente une section transversale elliptique, moyennant quoi la surface de section transversale repose perpendiculairement à l'axe longitudinal (4) de chaque milieu laser en forme de barreau ainsi que l'axe longitudinal (5) de chaque source de lumière de pompage en forme de barreau,
- l'intérieur du logement (1) est au moins partiellement revêtu d'un miroir
- et la surface supérieure d'au moins un milieu laser (2) en forme de barreau ainsi que la surface supérieure d'au moins une source de lumière de pompage (3) en forme de barreau sont disposées dans des points focaux du miroir.
